# EUROPÄISCHE PATENTSCHRIFT

(11) **EP 0 792 274 B1**
(45) Veröffentlichungstag und Bekanntmachung des Hinweises auf die Patenterteilung: **22.07.1998**
(21) Anmeldenummer: 95940181.1
(22) Anmeldetag: 16.11.1995
(51) Int. Cl.: C07F 5/02

(54) **VERFAHREN ZUR HERSTELLUNG VON ALKALIAMINOBORHYDRIDEN UND ALKALIAMINOBORHYDRID-KOMPLEXEN**
PROCESS FOR PREPARING ALKALINE AMINOBOROHYDRIDES AND ALKALINE AMINOBOROHYDRIDE COMPLEXES
PROCEDE DE PREPARATION D'HYDRURES D'AMINOBORES ALCALINS ET DE COMPLEXES D'HYDRURES D'AMINOBORES ALCALINS

(30) Priorität: 18.11.1994 DE 4441064
(43) Veröffentlichungstag der Anmeldung: 03.09.1997
(73) Patentinhaber: METALLGESELLSCHAFT AKTIENGESELLSCHAFT, 60323 Frankfurt am Main (DE)
(72) Erfinder: NÖTH, Heinrich, D-82031 Grünwald (DE); THOMAS, Steffen, D-82031 Grünwald (DE); RITTMEYER, Peter, D-65843 Sulzbach (DE); WIETELMANN, Ulrich, D-61381 Friedrichsdorf (DE)
(86) Internationale Anmeldenummer: EP9504500
(87) Internationale Veröffentlichungsnummer: WO9616066

(56) Entgegenhaltungen:
- US-A- 2 999 864
- INORG. CHEM. (INOCAJ);68; VOL.7 (6); PP.1248-9, UNIV. OF HAWAII;HONOLULU; HAWAII, GILJE J W ET AL 'Preparation and basicity of sodium dimethylamidotrihydroborate(III)'
- INORG. CHEM. (INOCAJ);75; VOL.14 (2); PP.440, UNIV. ARIZONA;DEP. CHEM.; TUCSON; ARIZ., KELLER P C 'Slow solution reaction of dimeric dimethylaminoborane with lithium hydride' in der Anmeldung erwähnt
- J. ORG. CHEM. (JOCEAH,00223263);84; VOL.49 (13); PP.2438-43, DREXEL UNIV.;DEP. CHEM.; PHILADELPHIA; 19104; PA; USA (US), HUTCHINS R O ET AL 'Aminoborohydrides as reducing agents. 1. Sodium (dimethylamino)- and (tert-butylamino)borohydrides as selective reducing agents' in der Anmeldung erwähnt
- TETRAHEDRON LETT. (TELEAY,00404039);92; VOL.33 (32); PP.4533-6, UNIV. CALIFORNIAEM.;DEP. CHEM. BIOCHEM.; SANTA CRUZ; 95064; CA; USA (US), FISHER G B ET AL 'Synthesis and characterization of lithium aminoborohydrides: a new class of powerful reducing agents' in der Anmeldung erwähnt
- J. ORG. CHEM. (JOCEAH,00223263); VOL.59 (21); PP.6378-85, 21.Oktober 1994 UNIVERSITY OF CALIFORNIA;DEPARTMENT OF CHEMISTRY AND BIOCHEMISTRY; SANTA CRUZ; 95064; CA; USA (US), FISHER G B ET AL 'Aminoborohydrides. 4. The Synthesis and Characterization of Lithium Aminoborohydrides: A New Class of Powerful, Selective, Air-Stable Reducing Agents'

## Beschreibung

Die Erfindung betrifft ein Verfahren zur Herstellung von Alkaliaminoborhydriden und Alkaliaminoborhydrid-Komplexen.

Aus der US-PS 2 999 864 sind Metallderivate von Borhydrid-Addukten bekannt. Die Herstellung dieser Verbindungen erfolgt durch die Umsetzung von Metallhydriden mit Borhydrid-Addukten. Beispielsweise soll in der gleichen Weise wie das Natriumdimethylaminoborhydrid auch das Lithiumdimethylaminoborhydrid durch direkte Umsetzung des entsprechenden Alkalihydrids mit Dimethylaminboran in trockenem Ethylenglycoldimethylether zugänglich sein. Allerdings geht aus der Publikation von Keller, "Inorganic Chemistry" (1975), Band 14 (2), Seite 140, hervor, daß die Umsetzung von Lithiumhydrid mit dimerem Dimethylaminboran bei Raumtemperatur in Diethylether erst nach mehreren Monaten Reaktionszeit zum Lithiumdimethylaminoborhydrid führt. Während Untersuchungen von Hutchins et al, "Journal of Organic Chemistry" (1984), Band 49, Seite 2438, die glatte Reaktion von Natriumhydrid mit Dimethylaminboran in Tetrahydrofuran zum Natriumdimethylaminoborhydrid bestätigen, geben Singaram et al, Tetrahedron Letters (1992), Band 33, Seite 4533, für die Herstellung von Lithiumaminoborhydriden die Reaktion von n-Butyllithium mit Aminboran-Addukten an. Das von Singaram vorgeschlagene Verfahren ist praktisch auf die Darstellung von Lithiumaminoborhydriden beschränkt, da nur Lithiumalkylverbindungen stabil und kommerziell verfügbar sind.

Schließlich ist aus der Veröffentlichung von Gilje et al, Inorg. Chem., Vol. 7(6), 1968, Seiten 1248 bis 1249, ein Verfahren zur Herstellung von Natriumdimethylaminoborhydrid bekannt, bei dem Dimethylaminoboran mit metallischem Natrium in flüssigem Ammoniak bei - 40 °C umgesetzt wird, wobei als Nebenprodukt Wasserstoff entsteht.

Da der Stand der Technik bezüglich der Herstellung von Alkaliaminoborhydriden uneinheitliche und zum Teil widersprüchliche Angaben macht, liegt der Erfindung die Aufgabe zugrunde, ein Verfahren zur Herstellung von Alkaliaminoborhydriden und deren Komplexverbindungen aus preiswerten Rohstoffen anzugeben, das innerhalb geringer Reaktionszeiten hohe Produktausbeuten liefert und das sich zur Darstellung sehr vieler homologer Verbindungen eignet.

Die der Erfindung zugrundeliegende Aufgabe wird zum einen durch ein Verfahren zur Herstellung von Alkaliaminoborhydriden der allgemeinen Formel

M(R¹R²N•BH₃)

durch Umsetzung eines Aminborans der allgemeinen Formel

R¹R²NH•BH₃

mit einem Alkalimetall oder mit einem Alkaliamid in einem unpolaren aliphatischen oder aromatischen Lösungsmittel gelöst, wobei
- M: Li, Na, K, Rb oder Cs,
- R¹: H, ein aliphatischer C₁- bis C₅-Rest, ein aromatischer Rest oder ein cycloaliphatischer Rest,
- R²: H, ein aliphatischer C₁- bis C₅-Rest, ein aromatischer Rest oder ein cycloaliphatischer Rest und
- R¹ und R²: ein gemeinsamer cyclischer Rest
ist.

Als Alkaliamide werden die Verbindungen MNR³R⁴ verwendet, wobei R³ und R⁴ jeweils H oder ein organischer Rest oder der Trimethylsilylrest ist.

Das erfindungsgemäße Verfahren, das bei 0 bis 100°C durchgeführt wird, liefert also durch Umsetzung von Addukten, die aus Borhydrid und Aminen bestehen, mit Alkalimetallen oder bestimmten Alkaliverbindungen Alkaliaminoborhydride, die in den unpolaren Lösungsmitteln in der Regel nur eine geringe Löslichkeit haben, so daß sie als farblose, amorphe oder kristalline Niederschläge anfallen. Aus den Reaktionsgemischen lassen sich die Endprodukte entweder durch Fest-Flüssig-Trennung oder durch Verdampfung des Lösungsmittels gewinnen. Die Produkte sind problemlos handhabbar, insbesondere sind sie bei Kontakt mit Luft und/oder Wasser nicht selbstentzündlich. Die Umsetzung verläuft in der Regel mit einer hohen Ausbeute an Alkaliaminoborhydriden.

Die der Erfindung zugrundeliegende Aufgabe wird zum anderen durch ein Verfahren zur Herstellung von Alkaliaminoborhydrid-Komplexen der allgemeinen Formel

M(R¹R²N•BH₃)•xL

durch Umsetzung eines Aminborans der allgemeinen Formel

R¹R²NH•BH₃

mit einem Alkalimetall oder mit einem Alkaliamid gelöst, wobei das unpolare aliphatische oder aromatische Lösungsmittel ganz oder teilweise durch ein dipolares aprotisches Lösungsmittel ersetzt wird und wobei
- M: Li, Na, K, Rb oder Cs.
- R¹: H, ein aliphatischer C₁- bis C₅-Rest, ein aromatischer Rest oder ein cycloaliphatischer Rest,
- R²: H, ein aliphatischer C₁- bis C₅-Rest, ein aromatischer Rest oder ein cycloaliphatischer Rest und
- R¹ und R²: ein gemeinsamer cyclischer Rest.
- L: das dipolare aprotische Lösungsmittel und
- x: ein Zahlenwert von 0,1 bis 5
ist. Als Alkaliamide werden die Verbindungen MNR³R⁴ verwendet, wobei R³ und R⁴ jeweils H oder ein organischer Rest oder der Trimethylsilylrest ist.

Die Umsetzung wird bei Temperaturen zwischen 0 und 100°C, vorzugsweise 20 bis 60°C, durchgeführt. In den dipolaren aprotischen Lösungsmitteln bilden die Alkaliaminoborhydride definierte Komplexe, die entweder in fester Form isoliert oder direkt in gelöster Form für organische Synthesen verwendet werden können. In einigen Fällen ist es zweckmäßig, als Lösungsmittel Mischungen aus nichtkomplexbildenden (Hexan, Toluol) und komplexbildenden (Dioxan, Tetrahydrofuran) Verbindungen zu verwenden, um in homogener Phase arbeiten zu können und den Anteil der teueren komplexbildenden Verbindungen zu verringern.

Nach der Erfindung ist es in einigen Fällen besonders vorteilhaft, wenn die Umsetzung mit einem Alkalimetall in Gegenwart eines Protonenakzeptors durchgeführt wird, wobei der Protonenakzeptor als Reaktionsbeschleuniger wirkt und den bei der Umsetzung gebildeten Wasserstoff addiert.

Als besonders vorteilhaft hat es sich erwiesen, wenn als Protonenakzeptor Styrol verwendet wird. Der Wasserstoff, der bei der Umsetzung des Aminborhydrid-Addukts mit einem Alkalimetall gebildet wird, hydriert die Seitenkette des Styrols, was zu einer Steigerung der Ausbeute führt. Als Protonenakzeptor können auch Butadien, Isopren oder ähnliche Di- oder Polyene verwendet werden.

Nach der Erfindung ist es ferner vorteilhaft, wenn als unpolares Lösungsmittel Hexan oder Toluol verwendet wird. In diesen Lösungsmitteln sind die Alkaliaminoborhydride weitgehend unlöslich.

Ferner ist es nach der Erfindung vorteilhaft, wenn als dipolares aprotisches Lösungsmittel Ether und/oder tertiäre Amine, vorzugsweise Tetrahydrofuran, Diethylether, Tetramethylethylendiamin oder Dioxan, verwendet werden. Diese Lösungsmittel bewirken die Bildung relativ stabiler und gut handhabbarer Komplexe.

Das erfindungsgemäße Verfahren eignet sich besonders gut zur Herstellung von Lithiumdimethylaminoborhydrid und den Komplexen dieser Verbindung, die in der organischen Synthese zur stereoselektiven Reduktion von α, β-ungesättigten Carbonylverbindungen zu α, β-ungesättigten Alkoholen oder zur Umsetzung von aliphatischen oder aromatischen Amiden zu den entsprechenden Alkoholen oder Aminen verwendet werden können. Ferner können Ester, Lactone, Anhydride, Epoxide, Oxime, Säurechloride, Halogenide und Nitrile mit Lithiumdimethylaminoborhydrid und dessen Komplexen reduziert werden.

Der Gegenstand der Erfindung wird nachfolgend anhand mehrerer Ausführungsbeispiele erläutert.

### Beispiel 1

In einem 2 l-Doppelmantelreaktor werden 29,5 g (0,50 mol) Dimethylaminboran und 12,0 g (0,52 mol) stückiges Natrium vorgelegt und ca. 250 ml Tetrahydrofuran (THF) zugegeben. Bei einer Innentemperatur von etwa 40°C werden 26,1 g (0,25 mol) Styrol innerhalb von ca. 1,5 h zugetropft. Die Reaktion springt innerhalb von ca. 5 min nach der ersten Styrolzugabe an und verläuft schwach exotherm. Nach Beendigung der Zugabe wird 0,5 h unter Rückfluß gekocht und nach Abkühlung die leicht trübe Lösung filtriert. Es werden 0,4 g unverbrauchtes Natrium zurückgewogen. Man erhält 294,5 g Lösung mit einem Hydridwasserstoffgehalt von 4,79 mmol/g, welches einem Gehalt von 37,0 g Natriumdimethylaminoborhydrid bzw. einer Ausbeute von 92 % entspricht. Das Natriumdimethylaminoborhydrid liegt in der Lösung als THF-Komplex vor.

### Beispiel 2

1,9 g (48,6 mmol) Kalium werden in 150 ml THF vorgelegt und unter Rühren mit 2,86 g (48,6 mmol) Dimethylaminboran versetzt. Unter langsamer Wasserstoffentwicklung geht das Kalium in Lösung. Nach ca. 18 h ist die Reaktion abgeschlossen. Aus der trüben Lösung wird ein Kaliummetallrückstand von 0,1 g entfernt. Die NMR-spektroskopische Untersuchung der Lösung zeigt, daß sich das Dimethylaminboran vollständig umgesetzt hat. Die gesättigte Tetrahydrofuranlösung enthält 0,36 mmol/ml Kaliumdimethylaminoborhydrid in Form des THF-Komplexes.

### Beispiel 3

1,9 g (48 mmol) Kalium werden in 150 ml Toluol vorgelegt und es werden 2,86 g (49 mmol) Dimethylaminboran hinzugegeben. Dabei setzt eine langsame Gasentwicklung ein, und es fällt ein farbloser Niederschlag aus. Nach ca. 12 h ist das Kalium vollständig umgesetzt. Der Niederschlag wird durch Zentrifugieren und Dekantieren abgetrennt und im Vakuum getrocknet. Es werden 3,8 g Kaliumdimethylaminoborhydrid erhalten, was einer Ausbeute von 81 % entspricht.

### Beispiel 4

2,85 g (73 mmol) Kalium werden zu einer Lösung von 8,4 g Diisopropylaminboran in 150 ml Hexan gegeben. Es wird sofortige Gasbildung festgestellt und ein farbloses Produkt fällt aus. Im Verlaufe von 1 h tritt eine Reaktionsbeschleunigung ein, und die Umsetzung ist nach ca. 3 h beendet. Das Lösungsmittel wird im Vakuum abgezogen. Es bleibt ein farbloses Pulver zurück, das aus Kaliumdiisopropylaminoborhydrid besteht.
Ausbeute: 10,5 g (94 %)

### Beispiel 5

In einem 250 ml-Kolben werden 2,1 g (54 mmol) Kalium in 150 ml Toluol vorgelegt und 5,3 g (54 mmol) Piperidinboran hinzugegeben. Dabei setzt mäßige Gasentwicklung ein und es fällt ein farbloses Produkt aus. Nach ca. 4 Tagen hat sich das Kalium gänzlich aufgelöst. Der Niederschlag wird abzentrifugiert und die überstehende Lösung verworfen. Das in Toluol praktisch völlig unlösliche Produkt wird mit 200 ml Toluol gewaschen und im Vakuum getrocknet. Es besteht aus Kaliumpiperidinoborhydrid, also aus K[(CH₂)₅N•BH₃], Fp. 245°C.
Ausbeute: 3,6 g (49 %)

### Beispiel 6

In einem eisgekühlten Kolben werden unter Rühren 3,2 g Lithiumamid (140 mmol) zu einer Lösung von 8,2 g Dimethylaminboran (140 mmol) in 40 ml THF gegeben. Sofort bei der LiNH₂-Zugabe beginnt die Lösung Gas zu entwickeln (NH₃). Dabei fällt ein farbloses Produkt aus. Danach wird 12 h bei Raumtemperatur gerührt. Zur Verbesserung der Filtriereigenschaften läßt man die Lösung ca. 24 h stehen und filtriert dann, wobei 2,3 g eines grauen, unlöslichen Rückstands erhalten werden. Das Filtrat wird bis zur Trockne eingeengt. Man erhält ein farbloses Pulver, das als Komplex mit 0,5 mol THF identifiziert wird. Es werden 13,5 g Li(Me₂N•BH₃)·0,5THF isoliert, was einer Ausbeute von 96 % entspricht.

### Beispiel 7

10,61 g Dimethylaminboran (180 mmol) werden in 150 ml THF gelöst. 1,25 g Lithiummetallpulver (180 mmol) werden zugegeben. Falls die Reaktion nicht spontan anspringt (erkennbar an Gasentwicklung), wird kurzfristig auf ca. 55°C erwärmt. Nach 0,5 h beginnt die Lösung aufzuschäumen und heftig zu gasen. Nach einer weiteren Stunde ist das Lithium vollkommen gelöst. Die farblose bis hellbraune Lösung wird vom Unlöslichen befreit. Das Filtrat wird durch Abdestillieren des Lösungsmittels in ein farbloses Pulver überführt. Die Rohproduktausbeute beträgt 14 g (77 %). Das Produkt läßt sich in 200 ml kurz zum Sieden gebrachtem Toluol lösen. Nachdem die Lösung vom Unlöslichen befreit wurde, kristallisiert die Verbindung in zwei Wochen bei Raumtemperatur in Form farbloser Quader aus.

### Beispiel 8

Zu einer Lösung von 21,22 g (360 mmol) Dimethylaminboran in 260 g THF werden 2,56 g (369 mmol) Lithiummetall gegeben. Dazu tropft man innerhalb 45 min 19,15 g (184 mmol) Styrol. Die Reaktion ist exotherm. Man beobachtet, daß sich das Li vollständig löst und sich eine leicht trübe Lösung bildet. NMR-spektroskopisch wird vollständige Umsetzung zum Lithiumdimethylaminoborhydrid, das als THF-Komplex vorliegt, nachgewiesen. Die filtrierte Lösung zeigt folgende Analyse:
Li: 1,08 mmol/g, B: 1,10 mmol/g, H: 3,07 mmol/g
Ausbeute 81 % (bezogen auf Hydridwasserstoff)

### Beispiel 9

77,5 g (≙ 371 mmol H⁻) der nach Beispiel 1 hergestellten ca. 12,9 %igen Lösung von Natriumdimethylaminoborhydrid werden in einem 500 ml-Kolben vorgelegt und bei Raumtemperatur mit der Lösung von 19,1 g (127 mmol) Benzoesäureethylester in 67 g THF versetzt. Nach vollständiger Zugabe wird 1 h unter Rückfluß gekocht und anschließend mit 6N Salzsäure hydrolysiert. Während der Reaktion und Hydrolyse entwickelt sich ein Gasvolumen, das 130 mmol Hydrid entspricht. Die organische Phase wird abgetrennt und die wäßrige Phase nochmals mit viermal 50 ml Et₂O ausgeschüttelt. Die vereinigten Etherphasen werden nach Neutralisation mit NaHCO₃ mit MgSO₄ getrocknet und der Diethylether im Vakuum abdestilliert. Ausbeute: 12,3 g (81 %). In der Rohproduktlösung ist kein Ester mehr nachweisbar (NMR, GC).

### Beispiel 10

1,23 g kristallines Li(Me₂N•BH₃)•0,5THF (12,18 mmol; aus Beispiel 7) werden in einem 100 ml-Kolben vorgelegt und 40 ml Toluol zugegeben. Dann werden 1,65 ml Benzoesäureethylester (16,45 mmol) zugetropft. Die Lösung färbt sich dabei hellgelb. Die Lösung (es liegt keine Suspension vor) wird 0,5 h unter Rückfluß erhitzt. Dann wird die Lösung mit 20 ml 6n HCl hydrolysiert. Dabei werden 200 ml H₂ (8,92 mmol) frei. Als Produkt entstehen 1,4 g (82 %) Benzylalkohol.

### Beispiel 11

20 ml einer 1,13 molaren Lösung des THF-Komplexes von Lithiumdimethylaminoborhydrid (22,6 mmol; aus Beispiel 8) werden in einem 50 ml-Kolben vorgelegt und 2,26 ml Benzoesäureethylester (22,5 mmol) zugegeben. Die Lösung wird dabei augenblicklich gelb. Dann wird 0,5 h unter Rückfluß erhitzt. Der Kolbeninhalt wird in einen Scheidetrichter überführt und mit 40 ml 6n HCl hydrolysiert. Anschließend wird soviel NaOH zugegeben bis die Lösung stark basisch ist. Die wäßrige Lösung wird mit 40 ml Diethylether ausgeschüttelt, und die Etherphase wird abgetrennt. Der Vorgang wird noch zweimal mit 20 ml Ether wiederholt. Die Etherphasen werden über Nacht über MgSO₄ getrocknet. Die getrocknete Lösung wird in einen Kolben überführt und der Ether im Vakuum abdestilliert. Als Produkt wird C₆H₅CH₂OH erhalten.
Ausbeute: 2,16 g (89 %)

## Patentansprüche

1. Verfahren zur Herstellung von Alkaliaminoborhydriden der allgemeinen Formel
M(R¹R²N•BH₃)
durch Umsetzung eines Aminborans der allgemeinen Formel
R¹R²NH•BH₃
mit einem Alkalimetall oder mit einem Alkaliamid in einem unpolaren aliphatischen oder aromatischen Lösungsmittel, wobei
M Li, Na, K, Rb oder Cs,
R¹ H, ein aliphatischer C₁- bis C₅-Rest, ein aromatischer Rest oder ein cycloaliphatischer Rest,
R² H, ein aliphatischer C₁- bis C₅-Rest, ein aromatischer Rest oder ein cycloaliphatischer Rest und
R¹ und R² ein gemeinsamer cyclischer Rest
ist.

2. Verfahren nach Anspruch 1 zur Herstellung von Alkaliaminoborhydrid-Komplexen der allgemeinen Formel
M(R¹R²N•BH₃)•xL
durch Umsetzung eines Aminborans der allgemeinen Formel
R¹R²NH•BH₃
mit einem Alkalimetall oder mit einem Alkaliamid, wobei das unpolare aliphatische oder aromatische Lösungsmittel ganz oder teilweise durch ein dipolares aprotisches Lösungsmittel ersetzt wird und wobei
M Li, Na, K, Rb oder Cs.
R¹ H, ein aliphatischer C₁- bis C₅-Rest, ein aromatischer Rest oder ein cycloaliphatischer Rest.
R² H, ein aliphatischer C₁- bis C₅-Rest, ein aromatischer Rest oder ein cycloaliphatischer Rest und
R¹ und R² ein gemeinsamer cyclischer Rest,
L das dipolare aprotische Lösungsmittel und
x ein Zahlenwert von 0,1 bis 5
ist.

3. Verfahren nach den Ansprüchen 1 bis 2, bei dem die Umsetzung mit einem Alkalimetall in Gegenwart eines Protonenakzeptors durchgeführt wird.

4. Verfahren nach den Ansprüchen 1 bis 3, bei dem als Protonenakzeptor Styrol verwendet wird.

5. Verfahren nach den Ansprüchen 1 bis 4, bei dem als unpolares Lösungsmittel Hexan oder Toluol verwendet wird.

6. Verfahren nach den Ansprüchen 2 bis 5, bei dem als dipolares aprotisches Lösungsmittel Ether und/oder tertiäre Amine, vorzugsweise Tetrahydrofuran, Diethylether, Tetramethylethylendiamin oder Dioxan, verwendet werden.

7. Verwendung des Verfahrens nach den Ansprüchen 1 bis 6 zur Herstellung von Lithiumdimethylaminoborhydrid und Komplexen des Lithiumdimethylaminoborhydrids.

## Claims

1. A method for the preparation of alkali aminoborohydrides of the general formula
M(R¹R²N·BH₃)
by reaction of an amine borane of the general formula
R¹R²NH·BH₃
with an alkali metal or with an alkali amide in a non-polar aliphatic or aromatic solvent, wherein
M is Li, Na, K, Rb or Cs,
R¹ is H, an aliphatic C₁ to C₅ radical, an aromatic radical or a cycloaliphatic radical,
R² is H, an aliphatic C₁ to C₅ radical, an aromatic radical or a cycloaliphatic radical, and
R¹ and R² are a common cyclic radical.

2. A method according to Claim 1 for the preparation of alkali aminoborohydride complexes of the general formula
M(R¹R²N·BH₃)·xL
by reaction of a amineborane of the general formula
R¹R²NH·BH₃
with an alkali metal or with an alkali amide, wherein the non-polar aliphatic or aromatic solvent is replaced in its entirety or in part by a dipolar aprotic solvent, and wherein
M is Li, Na, K, Rb or Cs,
R¹ is H, an aliphatic C₁ to C₅ radical, an aromatic radical or a cycloaliphatic radical,
R² is H, an aliphatic C₁ to C₅ radical, an aromatic radical or a cycloaliphatic radical, and
R¹ and R² are a common cyclic radical,
L is the dipolar aprotic solvent, and
x is a numerical value from 0.1 to 5.

3. A method according to Claims 1 to 2, in which the reaction is carried out with an alkali metal in the presence of a proton acceptor.

4. A method according to Claims 1 to 3, in which styrene is used as the proton acceptor.

5. A method according to Claims 1 to 4, in which hexane or toluene is used as non-polar solvent.

6. A method according to Claims 2 to 5, in which ether and/or tertiary amines, preferably tetrahydrofuran, diethyl ether, tetramethylethylenediamine or dioxane, are used as dipolar aprotic solvent.

7. The use of the method according to Claims 1 to 6 for the preparation of lithium dimethylaminoborohydride and complexes of lithium dimethylaminoborohydride.

## Revendications

1. Procédé de préparation d'aminoborohydrures de métal alcalin de formule générale
M(R¹R²N.BH₃)
par réaction d'un aminoborane de formule générale
R¹R²NH.BH₃
sur un métal alcalin ou sur un amide de métal alcalin dans un solvant aliphatique ou aromatique non polaire, dans lequel
M est Li, Na, K, Rb ou Cs,
R¹ est H, un radical aliphatique en C₁ à C₅, un radical aromatique ou un radical cycloaliphatique,
R² est H, un radical aliphatique en C₁ à C₅, un radical aromatique ou un radical cycloaliphatique, et
R¹ et R² représentent ensemble un radical cyclique commun

2. Procédé selon la revendication 1 de préparation de complexes d'aminoborohydrures de métal alcalin de formule générale
M(R¹R²N.BH₃).xL
par réaction d'un aminoborane de formule générale
R¹R²NH.BH₃
sur un métal alcalin ou sur un amide de métal alcalin, le solvant aliphatique ou aromatique non polaire étant remplacé en tout ou partie par un solvant aprotique dipolaire et dans lequel
M est Li, Na, K, Rb ou Cs,
R¹ est H, un radical aliphatique en C1 à C5, un radical aromatique ou un radical cycloaliphatique,
R² est H, un radical aliphatique en C1 à C5, un radical aromatique ou un radical cycloaliphatique, et
R¹ et R² représentent ensemble un radical cyclique commun
L est le solvant aprotique dipolaire, et
x est un nombre de 0 à 5.

3. Procédé suivant les revendications 1 à 2, dans lequel la réaction sur un métal alcalin est effectuée en présence d'un accepteur de protons.

4. Procédé suivant les revendications 1 à 3, dans lequel on utilise comme accepteur de protons du styrène.

5. Procédé suivant les revendications 1 à 4, dans lequel on utilise comme solvant non polaire de l'hexane ou du toluène.

6. Procédé suivant les revendications 2 à 5, dans lequel on utilise comme solvant aprotique dipolaire un éther oxyde et/ou une amine tertiaire, de préférence du tétrahydrofuranne, de l'oxyde diéthylique, de la tétraméthyléthylènediamine ou du dioxanne.

7. Utilisation du procédé suivant les revendications 1 à 7, pour la préparation de diméthylaminoborohydrure de lithium et de complexes de diméthylaminoborohydrure de lithium.
